# EUROPEAN PATENT APPLICATION

(11) **EP 1 134 055 A1**
(43) Date of publication of application: **19.09.2001**
(21) Application number: 01105824.5
(22) Date of filing: 08.03.2001
(51) Int. Cl.: B23Q 1/01, B23Q 39/02

(54) **Machine for working profiled elements**

(30) Priority: 09.03.2000 CH 459002000
(71) Applicant: Emmergi S.A., Luxembourg, Lugano Branch, 6900 Lugano (CH)
(72) Inventor: Bellucci, Marco, 41100 Modena (IT)
(74) Representative: Luppi, Luigi

(57) **Abstract**

A machine for working elongated semi-finished objects (14), comprising a bed (2) onto which portal means (6) is supported in longitudinally controlled manner, said portal means (10) having cross-beam means (10) with which spindle means (34) is coupled for working a semi-finished object (14) to be worked by means of tools (36), said cross-beam (10) being further associated with further spindle means (50) which may be provided with further tools (52) suitable for working said semi-finished objects (14).

## Description

The invention relates to a machine and a method for working elongated elements., particularly metallic profiled elements, or profiled elements made of plastic material, or made of composite material, used for example for manufacturing shutters and frames for doors or windows, or for structural elements in general.

Prior art comprises machine tools having three axes in which a profiled element to be worked is kept in a working position on a bed through a plurality of fixing clamps which may be positioned in longitudinally distributed transversal sections on said machine bed.

A movable trolley, slidably coupled with the bed and carrying motorized groups of tools is positioned at pre-established longitudinally distributed transversal sections of the profiled element in order to carry out on each section the required mechanical working.

A drawback of these known machines is that the lateral faces of the profiled element which is being worked, i.e. the faces arranged in substantially perpendicularly to the bed, are hardly accessible and then difficult to be worked.

Such faces may be worked by means of operating heads having mechanical transmission of the motion which involves remarkable mounting and dismounting time.

Otherwise, after the face of the profiled element directed towards the tools has been worked, it is necessary to release the profiled element and rotate it of 90° about its longitudinal axis in order to be able to work also the lateral faces'of the profiled element.

Therefore there is the problem of improving the known machines, particularly of making more immediate the workings of the lateral faces of a semi-finished object being worked.

According to the invention, a machine having three controlled axes and suitable for working elongated semi-finished objects is provided, comprising a bed onto which portal means is supported in longitudinally controlled manner, said portal means having cross-beam means with which spindle means is coupled for working a semi-finished object to be worked by means of respective tools, characterized in that, said cross-beam means is further associated with spindle means which may be provided with further tools suitable for working said semi-finished objects.

Therefore, mounting and dismounting of the operating heads with mechanical transmission of the motion are no longer required, since the further spindle means may be properly oriented in order to works the lateral faces.

The invention can be better understood and carried out with reference to the enclosed drawings, which show an indicative and not restrictive embodiment thereof, in which:
Figure 1 is a perspective view of a machine for working elongated semi-finished objects;
Figure 2 is an enlarged and broken perspective view of portal means of the machine of Figure 1;
Figure 3 is a view like that of Figure 2, showing the opposite side of the portal means.

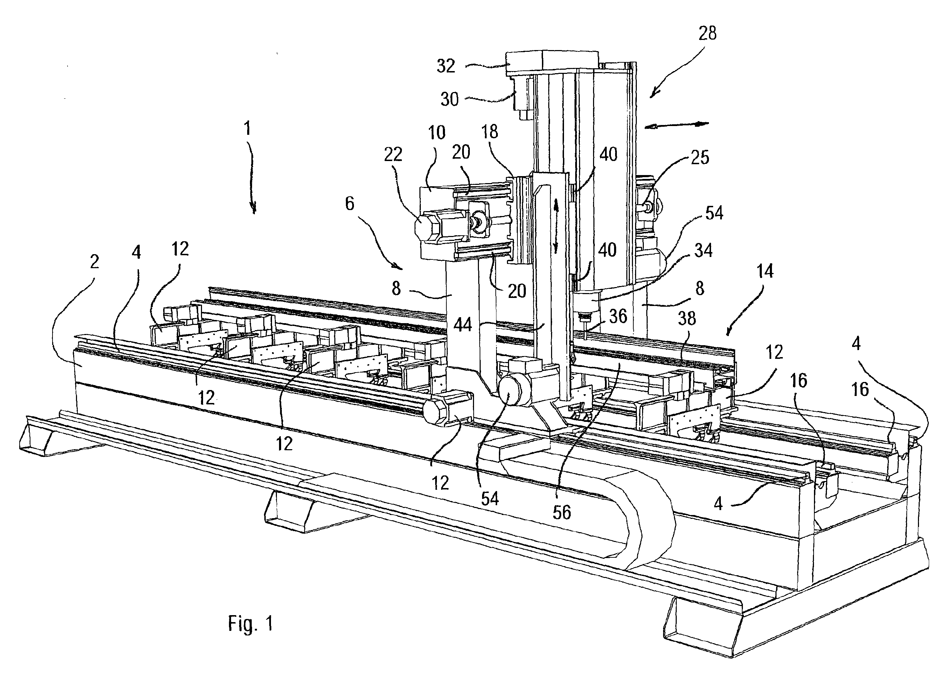

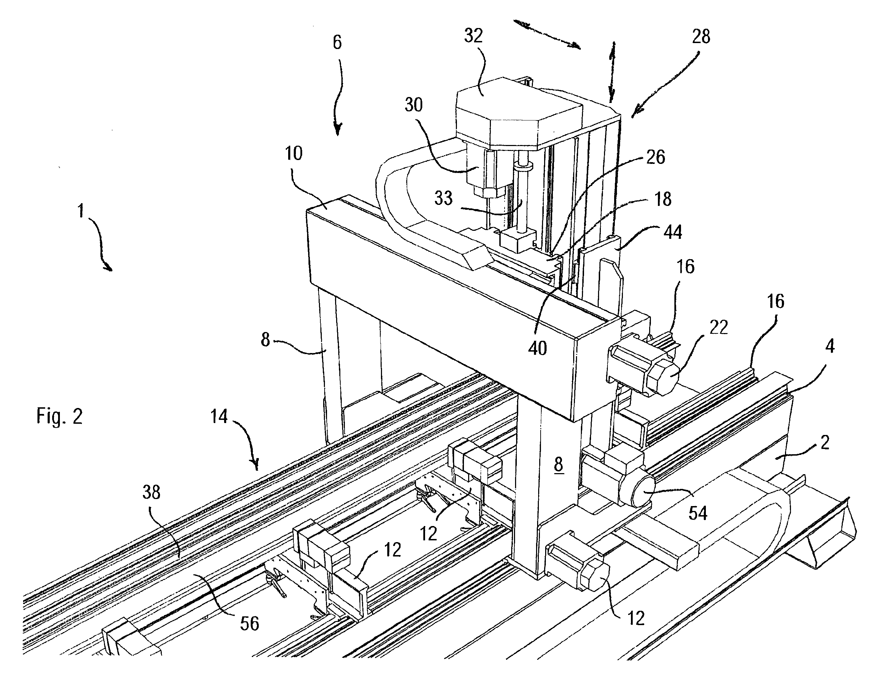

As shown in Figures 1 and 2, a machine 1 comprises a bed structure 2 provided with a pair of longitudinal guides 4 onto which a portal 6 is supported so as to be adjustably positionable, said portal 6 having a pair of posts 8 and a cross-beam 10. The portal 6 is provided, at the lower end of one of the posts 8, with a motor reducer group 12 provided with not represented drive means, comprising for example a pinion-rack coupling, for moving the portal 6 along the guides 4.

During working, on the bed 2, internally to the posts 8, fixing clamps 12 of a profiled element 14 may be positioned; the clamps 12 are slidably coupled with further longitudinal guides 16 extending along the bed 2 so as to be able to be moved at sections of the profiled 14 which do not need to be worked.

A trolley 18, engaged on horizontal guide means 20 positioned at one side of the cross-beam 10, is slidably coupled with the cross-beam 10 so as to be able to slide in a transversal direction with respect to the bed 2: motorized means 22 actuating a horizontal screw 24 drives a not represented female screw, fixed to the trolley 18, for controlling transversal movements of the trolley 18 on the cross-beam 10.

A further trolley 28 is coupled with the trolley 18 on further guide means 26, provided with further motorized means 30 coupled, by means of a belt-pulleys transmission contained into a casing 32, with a vertical screw 33 coupled with a further not represented female screw; therefore, by actuating the further motorized means 30 it is possible to control vertical movements of the further trolley 28.

The further trolley 28 is provided, at a lower part thereof, with a spindle 35, actuated by a motor 37 having vertical axis, said spindle 35 being able to be provided with tools 36 suitable for working the profiled elements 14 at the upwards-facing side 38 thereof.

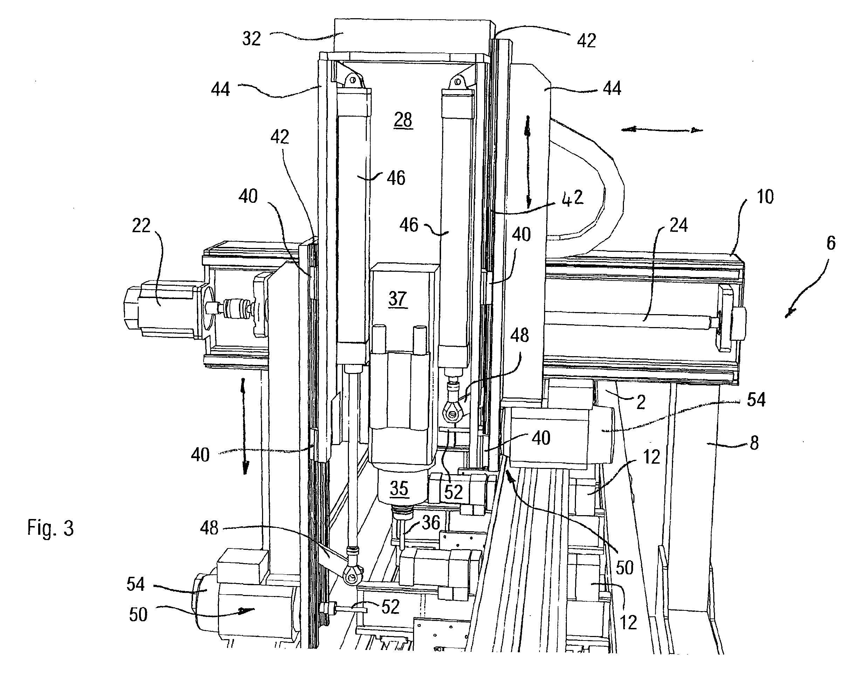

As shown in Figure 3, the further trolley 28 is laterally provided with four pair of slides 40, each pair engaging vertical sliding guides 42 fixed to respective movable supports 44, each arranged at one side of the further trolley 28.

Each movable support 44 is caused to slide in a vertical direction on the slides 40 through actuating means comprising a pneumatic.actuating cylinder 46 having a body hinged at the further trolley 28 and a stem hinged to an appendix 48 of the movable support 44.

At the lower portion of each movable support 44 a further spindle 50 is supported, such spindle 50 being arranged horizontally, provided with a further tool 52 and actuated by a motor 54.

Since the spindles 50 and the respective tools 52 and the respective tools 52 are arranged horizontally, it is possible to work the lateral faces 56 of the profiled element 14 after one or both of the movable supports 44 have been lowered to the level of the profiled beam 14.

## Claims

1. Machine for working elongated semi-finished objects (14), comprising a bed (2) onto which portal means (6) is supported in longitudinally controlled manner, said portal means (10) having cross-beam means (10) with which spindle means (34) is coupled for working a semi-finished object (14) to be worked by means of tools (36), **characterized in that**, said cross-beam means (10) is further associated with further spindle means (50) which may be provided with further tools (52) suitable for working said semi-finished objects (14).

2. Machine according to claim 1, wherein a trolley (18) is slidably coupled with said crossbeam (10) through actuating means (22, 24) for controlling the transversal position of the trolley (18) with respect to said bed (2).

3. Machine according to claim 2, wherein a further trolley (28) is slidably coupled with said trolley (18) through further actuating means (30, 32, 33) for controlling the vertical position of said further trolley (28) with respect to said bed (2).

4. Machine according to claim 3, wherein said spindle means (34) is supported to said further trolley (28).

5. Machine according to claim 3, or 4, wherein said. further trolley (28) is laterally provided with vertical sliding means (40) for receiving at least one movable support (44).

6. Machine according to claim 5, wherein between said at least one movable support (44) and said further trolley (28) actuating means (46) for moving said movable support (44) on said further trolley (28) is interposed.

7. Machine according to claim 6, wherein said actuating means comprises linear actuating means (46).

8. Machine according to claim 7, or 6, wherein said further spindle means (50) is supported to said at least one movable support (44).

9. Machine according to one of the preceding claims, wherein said spindle means (34) is arranged along a substantially vertical direction.

10. Machine according to one of the preceding claims, wherein said further spindle means (50) is arranged along a substantially horizontal direction.
